# EUROPEAN PATENT APPLICATION

(11) **EP 4 283 774 A2**
(43) Date of publication of application: **29.11.2023**
(21) Application number: 22217204.1
(22) Date of filing: 29.12.2022
(51) Int. Cl.: H01M 50/503, H01M 50/505, H01M 50/509, H01M 50/516

(54) **ELECTRICAL CONNECTION ASSEMBLY FOR BATTERY MODULE, BATTERY MODULE AND VEHICLE**

(30) Priority: 23.05.2022 CN 202210562903
(71) Applicant: Guangzhou Xiaopeng Motors Technology Co., Ltd., Guangzhou, Guangdong 510000 (CN)
(72) Inventor: LI, Yujie, Guangzhou Guangdong 510000 (CN); ZHENG, Xiaokai, Guangzhou Guangdong 510000 (CN); WANG, Hangting, Guangzhou Guangdong 510000 (CN)
(74) Representative: Isarpatent

(57) **Abstract**

The present application relates to an electric connection assembly for a battery module, a battery module and a vehicle. The electric connection assembly includes a plurality of electrical connection bodies corresponding to a plurality of cell groups of the battery module in a one-to-one relationship, and configured to electrically connect the plurality of the cell groups, wherein, the cell group includes a plurality of single cells, an anode electrode and a cathode electrode of the single cell are arranged on a same one side thereof, the electrical connection body is provided with a plurality of electrical connection portions respectively connected with the electrodes of the plurality of the single cells; each of a plurality of conductive portions is formed between adjacent electrical connection portions, and the plurality of conductive portions of the electrical connection body have a same length and a same cross-sectional area taken along a direction perpendicular to a length direction. Embodiments of the present application provide the plurality of conductive portions with the same length and the same cross-sectional area taken along the direction perpendicular to the length direction, so that the plurality of conductive portions of each electrical connection body have same internal resistances, and thus each single cell has same voltage. As a result, this lowers voltage difference between the single cells, and reduces workload of information processing of BMS and workload of backend detection.

## Description

### TECHNICAL FIELD

The present invention relates to the technical field of vehicle, and in particular, to an electrical connection assembly for a battery module, a battery module and a vehicle.

### DESCRIPTION OF THE RELATED ART

In a battery pack with cylindrical cells, a bus bar is generally used to connect several cells in series and parallel. Because energy of a single cell is less, in order to meet the requirements of high battery life, most OEMs adopt a multi-channel parallel scheme. This can significantly increase the energy of the battery pack and the cruising range of a vehicle.

In a related art, when the multi-channel parallel scheme is used, the more cells are connected in parallel in a single parallel circuit, the more complicated the design of the bus bar will be. Although this solves a problem of increasing the energy of the battery pack, in the dynamic or static process, there will be a large voltage difference between the cells. Thus, workload of information processing of a BMS (Battery Management System) and backend detection will be increased during a charging and discharging process.

### SUMMARY

In order to solve or partly solve the above problems in the related art, the present application provides an electrical connection assembly for a battery module, a battery module and a vehicle, thereby lowering voltage difference between the single cells, and reducing workload of information processing of BMS and workload of backend detection.

According to a first aspect of the present application, there is provided an electrical connection assembly for a battery module comprising:
a plurality of electrical connection bodies corresponding to a plurality of cell groups of the battery module in a one-to-one relationship, and configured to electrically connect the plurality of the cell groups,
wherein, the cell group comprises a plurality of single cells, an anode electrode and a cathode electrode of the single cell are arranged on a same one side thereof, and the electrical connection body is provided with a plurality of electrical connection portions respectively connected with the electrodes of the plurality of the single cells;
each of a plurality of conductive portions is formed between adjacent electrical connection portions, and the plurality of conductive portions of the electrical connection body have a same length and a same cross-sectional area taken along a direction perpendicular to a length direction.

In an embodiment, the electrical connection body is provided with a plurality of electrical connection portions for anode electrode and a plurality of electrical connection portions for cathode electrode, the electrical connection portion for anode electrode configured to connect with the anode electrode of the single cell of one of the cell groups, and the electrical connection portion for cathode electrode configured to connect with the cathode electrode of the single cell of another of the cell groups;
wherein the electrical connection portion for anode electrode of one of the electrical connection bodies extends into the electrical connection portion for cathode electrode of another adjacent electrical connection body; or the electrical connection portion for cathode electrode of one of the electrical connection bodies extends into the electrical connection portion for anode electrode of another adjacent electrical connection body.

In an embodiment, the electrical connection body is provided with a preset number of the electrical connection portions arranged respectively at locations corresponding to a plurality of vertices of polygons.

In an embodiment, the plurality of the electrical connection bodies are arranged in a rectangular structure along a same plane, and the rectangular structure is composed of the polygons; wherein the electrical connection body is provided with at least five electrical connection portions.

In an embodiment, the plurality of electrical connection portions for anode electrode of the electrical connection body are arranged in a first area, the plurality of electrical connection portions for cathode electrode are arranged in a second area, and two adjacent cell groups are arranged in the first area and the second area respectively; the plurality of electrical connection portions for anode electrode in the first area are arranged respectively at locations corresponding to a plurality of vertices of first polygons, and the plurality of electrical connection portions for cathode electrode in the second area are arranged respectively at locations corresponding to a plurality of vertices of second polygons; and the first polygon has a same shape with the second polygon, or has a different shape from the second polygon.

In an embodiment, the first polygons and the second polygons are alternately arranged in a direction where the cell groups are arranged, wherein at least two of the first polygons are arranged between every two of the second polygons.

In an embodiment, the electrical connection body is made of sheet-like conductive material, and the electrical connection portion is formed with a connecting surface fixed with the electrode of the single cell.

In an embodiment, the electrical connection body comprises a first connection surface for forming the electrical connection portion for anode electrode, and a second connection surface for forming the electrical connection portion for cathode electrode; and the first connection surface and the second connection surface are layered and connected by bending portions.

According to a second aspect, there is provided a battery module comprising a plurality of cell groups configured to be connected by the electrical connection assembly according to the first aspect.

According to a third aspect, there is provided a vehicle comprising the battery module according to the second aspect.

Technical solutions provided by the embodiments of the present application have the following advantages:
The electric connection assembly of the embodiments in the present application includes a plurality of electrical connection bodies corresponding to a plurality of cell groups of the battery module in a one-to-one relationship, and configured to electrically connect the plurality of the cell groups, wherein the cell group includes a plurality of single cells, an anode electrode and a cathode electrode of the single cell are arranged on a same one side thereof, the electrical connection body is provided with a plurality of electrical connection portions respectively connected with the electrodes of the plurality of the single cells; each of a plurality of conductive portions is formed between adjacent electrical connection portions, and the plurality of conductive portions of the electrical connection body have a same length and a same cross-sectional area taken along a direction perpendicular to a length direction. Technical solutions provided by embodiments of the present application provide the plurality of conductive portions with the same length and the same cross-sectional area taken along the direction perpendicular to the length direction, so that the plurality of conductive portions of each electrical connection body have same internal resistances, and thus each single cell has same voltage. As a result, this lowers voltage difference between the single cells, and reduces workload of information processing of BMS and workload of backend detection.

It is appreciated that the foregoing general descriptions and the following detailed descriptions are exemplary and explanatory only and are not limiting of the present application.

### BRIEF DESCRIPTION OF THE DRAWINGS

The above and other objects, features and advantages of the present application will become more apparent from the more detailed description of the exemplary embodiments of the present application taken in conjunction with the accompanying drawings, wherein the same reference numerals generally represent the same parts.
FIG.1 is an overall structural schematic diagram of an electrical connection assembly according to an embodiment of the present application;
FIG.2 is a partially enlarged structural schematic diagram of an electrical connection assembly according to an embodiment of the present application;
FIG.3 is a structural schematic diagram of an electrical connection body of an electrical connection assembly according to an embodiment of the present application;
FIG.4 is a structural schematic diagram of another electrical connection body of an electrical connection assembly according to an embodiment of the present application; and
FIG.5 is a partial three-dimensional structure view of an electrical connection assembly according to an embodiment of the present application.

Reference numerals:
100: electrical connection assembly;
110a: first electrical connection body;
100b: second electrical connection body;
111: electrical connection portion for cathode electrode;
112: electrical connection portion for anode electrode;
113: conductive portion;
114: bending portion;
1111: hollow portion;
1112: through hole;
120: first polygon;
130: second polygon.

### DETAILED DESCRIPTION OF EXEMPLARY EMBODIMENTS

Embodiments of the present application will be described in more detail below with reference to the accompanying drawings. Although embodiments of the present application are illustrated in the drawings, it will be appreciated that the present application may be implemented in various forms and should not be limited by the embodiments set forth herein. Rather, these embodiments are provided so that this application will be thorough and complete, and will fully convey the scope of this application to those skilled in the art.

It will be appreciated that although the terms "first", "second", "third", etc. may be used in this application to describe various information, such information should not be limited by these terms. These terms are only used to distinguish information of the same type from each other. For example, first information may also be referred to as second information, and similarly, the second information may also be referred to as the first information, without departing from the scope of the present application. Thus, a feature defined with "first" or "second" may expressly or implicitly include one or more of those features. In the description of the present application, "plurality" means two or more, unless otherwise expressly and specifically defined.

In the description of this application, it should be understood that orientation or positional relationship indicated by terms "length", "width", "upper", "lower", "front", "rear", "left", "right", "vertical", "horizontal", "top", "bottom", "inner", "outer", etc. is based on the orientation or positional relationship shown in the drawings; and the terms are only intended for the convenience of describing the present application and simplifying the description, but not indicated or implied that the device or element must have a particular orientation and be constructed and operate in a particular orientation, and therefore should not be construed as limiting the present application.

Unless otherwise expressly specified and limited, terms "installation", "joint", "connection", "fixation" and other terms should be understood in a broad sense. For example, the terms may be understood as a fixed connection, or a detachable connection or integrated into one piece. These terms may be understood as a mechanical connection or an electrical connection. These terms may be understood as a direct connection or an indirect connection through an intermediate medium. These terms may be understood as an internal communication of two elements or the interaction relationship between the two elements. For those skilled in the art, the specific meanings of the above terms in this application can be understood according to specific situations.

In the related art, when the multi-channel parallel scheme is adopted, the more cells are connected in parallel in a single parallel circuit, the more complicated the design of the bus bar will be. Although this solves a problem of increasing the energy of the battery pack, in the dynamic or static process, there will be a large voltage difference between the cells. Thus, workload of information processing of a BMS (Battery Management System) and backend detection will be increased during a charging and discharging process. In view of the above problems, the embodiments of the present application provide an electrical connection assembly for a battery module, which reduces the voltage difference between the cells, and reduces the workload of information processing of the BMS and the workload of backend detection.

The technical solutions of the embodiments of the present application will be described in detail below with reference to the accompanying drawings.

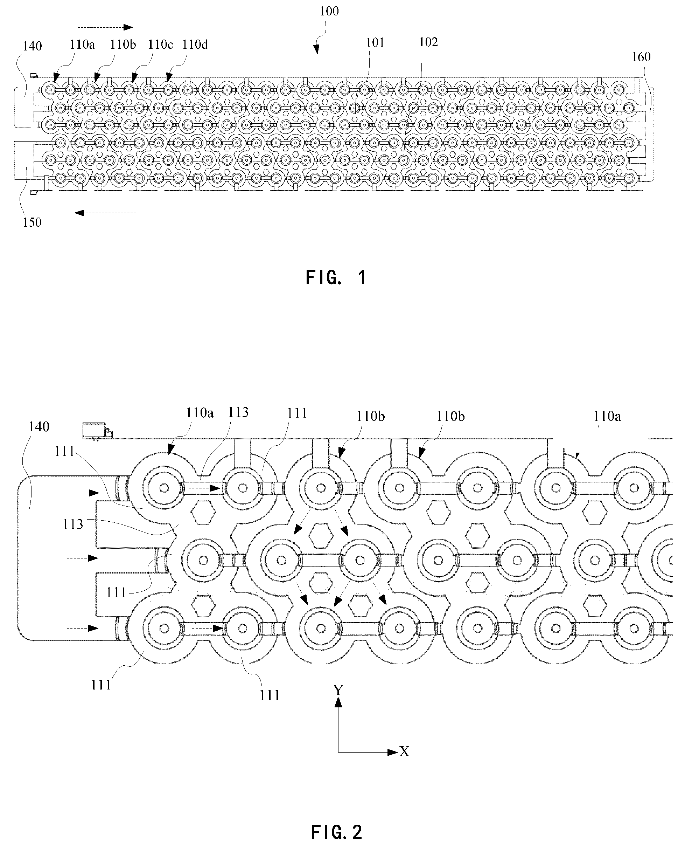

FIG.1 is an overall structural schematic diagram of an electrical connection assembly according to an embodiment of the present application; and FIG.2 is a partially enlarged structural schematic diagram of an electrical connection assembly according to an embodiment of the present application.

Referring to FIGS. 1 and 2, an electrical connection assembly 100 of the embodiment of the present application includes a plurality of electrical connection bodies corresponding to a plurality of cell groups of a battery module in a one-to-one relationship, and configured to electrically connect the plurality of cell groups, e.g. in series. The cell group includes a plurality of single cells, and an anode electrode and a cathode electrode of the single cell are arranged on a same one side thereof. The electrical connection body is provided with a plurality of electrical connection portions (for example, a plurality of electrical connection portions 111 for cathode electrode and a plurality of electrical connection portions 112 for anode electrode). The plurality of electrical connection portions are respectively connected with the electrodes of a plurality of single cells. Each of a plurality of conductive portions 113 is formed between adjacent electrical connection portions. The plurality of conductive portions 113 of the electrical connection body have a same length and a same cross-sectional area taken along a direction perpendicular to a length direction X. This embodiment provides a technical solution where the plurality of conductive portions 113 have the same length and the same cross-sectional area taken along the direction perpendicular to the length direction X, so that the plurality of conductive portions 113 of each electrical connection body have same internal resistances, and thus each single cell has same voltage. As a result, this lowers voltage difference between the single cells, and reduces workload of information processing of BMS and workload of backend detection.

In an embodiment, the electrical connection body may also be referred to as a bus bar. The electrical connection body is made of a sheet-like conductive material with a specific thickness. The electrical connection portion and the conductive portion 113 are integrated into one piece. A plurality of electrical connection portions and conductive portions 113 can be formed by several through holes 1112 being opened on the sheet-like conducting material. Alternatively, a plurality of electrical connection portions and conductive portions 113 can be formed by cutting the sheet-shaped conductive material in a predetermined manner. In some embodiments, the conductive material of the electrical connection body may be, for example, copper, aluminum, nickel, or the like.

In the related art, when there is a large number of single cells in a single parallel structure, the structure of the bus bar will be complicated. With the complication of the structure of the bus bas, the internal resistances of the bus bar to the single cells are inconsistent with each other, which results in that there is a large voltage difference between the single cells.

In the solution provided by this embodiment, a dotted arrow in FIG. 1 shows a flow direction of current. Since the plurality of conductive portions 113 have the same length and the same cross-sectional area, according to the law of resistance, that is, a formula R=ρL/S (where R is resistance value of the conductor, p is resistivity of the conductor, L is length of the conductor, and S is a cross-sectional area of the conductor), it can be known that the plurality of conductive portions 113 in the same electrical connection body have the basically same internal resistance in the case that the plurality of conductive portions 113 have the same length and the same cross-sectional area taken along the direction perpendicular to the length direction. Therefore, it effectively reduces the internal resistance difference on a circuit of each single cell in the parallel structure formed by multiple electrical connection bodies, so that the plurality of single cells in the structure having the plurality of parallel single cells have the basically same voltage, and thus little voltage difference. As a consequence, this reduces the workload of information processing of the BMS, so that the workload of the big data backend for detecting battery module overshoot or overdischarge can also be greatly reduced.

In this embodiment, the electrical connection body is provided with a plurality of electrical connection portions 112 for anode electrode and a plurality of electrical connection portions 111 for cathode electrode. The electrical connection portion 112 is configured to connect with the anode electrode of the single cell of one of the cell groups, and the electrical connection portion 111 for cathode electrode is configured to connect with the cathode electrode of the single cell of another of the cell groups. The electrical connection portion 112 for anode electrode of one of the electrical connection bodies extends into the electrical connection portion for cathode electrode of another adjacent electrical connection body; or the electrical connection portion 111 for cathode electrode of one of the electrical connection bodies extends into the electrical connection portion for anode electrode of another adjacent electrical connection body. For example, an opening is provided in a middle of the electrical connection portion 111 for cathode electrode, and the anode electrode of the cell is arranged corresponding to the opening; and the electrical connection portion 111 for cathode electrode of another electrical connection body can be accommodated in the opening, and can be electrically connected to the anode electrode of single cell.

The single cell in this embodiment may be a cylindrical cell whose anode electrode and cathode electrode are arranged on the same one side thereof. The anode electrode is located at a center of an upper end of the single cell, and the cathode electrode is located at a periphery of the anode electrode and at a higher level than the cathode electrode. Since the electrical connection body is provided with the electrical connection portion 112 for anode electrode and the electrical connection portion 111 for cathode electrode, the plurality of cells can be electrically connected on the same side and at the upper end of the single cell.

In this embodiment, the shape of the electrical connection portion 112 for anode electrode can be arranged to match with the structure feature of the anode electrode of the cell. The electrical connection portion 112 for anode electrode has an annular sheet-like structure which can integrally attach onto the anode electrode at the center of the cell end.

The shape of the electrical connection portion 111 for cathode electrode can be arranged to match with the cathode electrode of the cell. For example, the electrical connection portion 111 for cathode electrode has an annular sheet-like structure, and a hollow portion 1111 is formed in the annular sheet-like structure and has an inner diameter larger than an outer diameter of the electrical connection portion 112 for anode electrode. This enables the electrical connection portion 112 for anode electrode to be accommodated in the hollow portion 1111, such that both the electrical connection portion 112 for anode electrode and the electrical connection portion 111 for cathode electrode can be stably connected to the upper end of the cell.

In this embodiment, several cells in the battery module are arranged in a rectangular array, and the plurality of cell groups are combined into a rectangular battery module. The electrical connection body includes a preset number of electrical connection portions arranged respectively at locations corresponding to a plurality of vertices of the polygon. The plurality of electrical connection bodies are arranged along a same plane into a rectangular structure, and the rectangular structure is composed of several polygons. In one implementation, the different electrical connection bodies can be formed into polygons of different shape. The rectangular structure can be combined by several polygons of different shape.

Since the plurality of electrical connection bodies can be combined into a rectangle, the plurality of conductive portions 113 can have the same length, which improves the energy density of the battery module, and ensures a flexible layout and stability of the electrical connection assembly 100.

In an implementation, the electrical connection body includes at least five electrical connecting portions, and the at least five electrical connection portions can be connected by the conductive portion 113 to form a structure similar to a quadrangle or a hexagon.

Referring to FIG. 2, in some embodiments, two adjacent cell groups are arranged in a first area and a second area respectively, the plurality of electrical connection portions for anode electrode 112 of the electrical connection body are arranged in the first area, and the plurality of electrical connection portions 111 for cathode electrode are arranged in the second area. The plurality of electrical connection portions 112 for anode electrode in the first area are arranged respectively at locations corresponding to a plurality of vertices of a first polygon 120, and the plurality of electrical connection portions 111 for cathode electrode in the second area are arranged respectively at locations corresponding to a plurality of vertices of a second polygon 130. The first polygon 120 has a same shape with the second polygon 130, or has a different shape from the second polygon 130.

In some embodiments, the first polygon 120 can have a quadrilateral structure. For example, the first polygon 120 can be an isosceles trapezoid. It may also be understood that the five electrical connection portions 111 are connected by the conductive portions 113 to form a shape similar to five-ring pattern. In an implementation, the second polygon 130 can have a hexagonal structure. The hexagonal structure is composed of two isosceles triangles whose vertices are connected and whose base sides are opposite to each other and are parallel to each other. The base sides of the two isosceles triangles are parallel to a length direction X of the battery module, and two parallel sides of the quadrilateral are inclined with respect to the length direction X of the battery module.

It is worth noting that this application neither does limit the number of electrical connection portions in the electrical connection body, nor does limit the shapes of polygons. In other embodiments, the number of electrical connection portions in the electrical connection body can also be less than five or more than five; and the polygons can also be triangles, quadrilaterals, or shapes with more than six sides.

Continuing to FIG. 1, in some embodiments, the battery module may include at least two paratactic groups. For example, there are a first group 101 and a second group 102 respectively at either side of a horizontal dotted line in FIG. 1; and each cell group is composed of five cells in parallel. When a plurality of cell groups are arranged in sequence in the length direction X of the battery module, several cells in the plurality of cell groups are arranged in a form of three rows in a width direction Y of the battery module, and the cells in the adjacent rows are displaced from each other in the width direction Y That is, each cell in one row is located in the width direction Y at a location corresponding to a middle part of another adjacent row of cells.

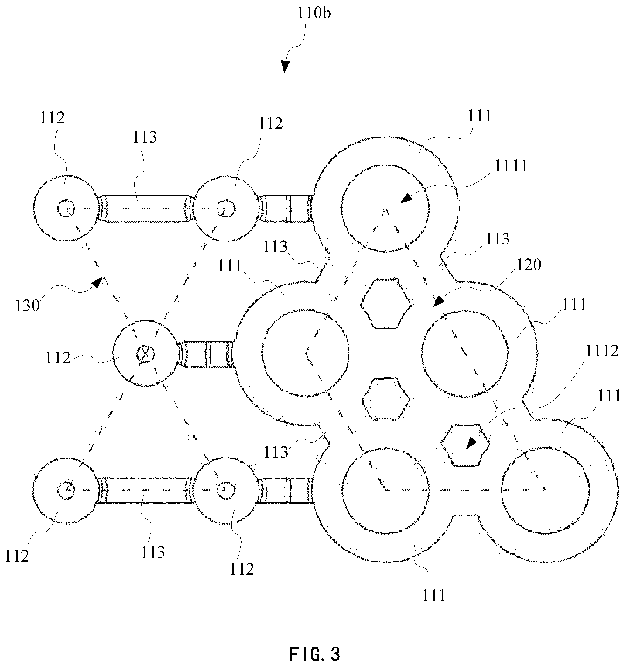

FIG.3 is a structural schematic diagram of an electrical connection body of an electrical connection assembly according to an embodiment of the present application.

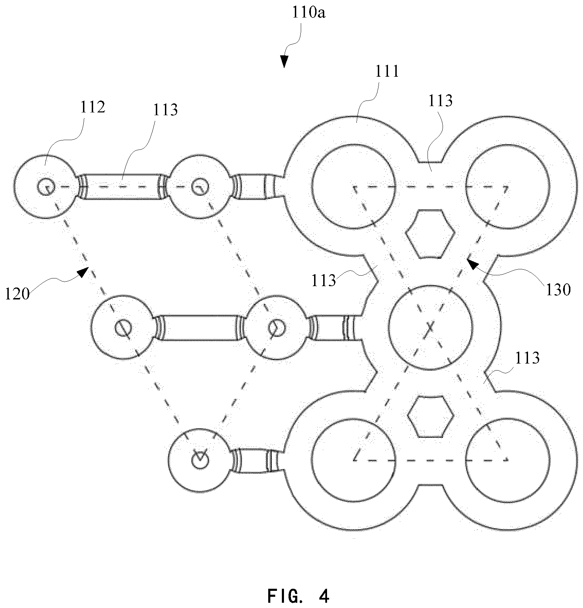

FIG.4 is a structural schematic diagram of another electrical connection body of an electrical connection assembly according to an embodiment of the present application.

Referring to FIGS. 2, 3 and 4, in this embodiment, first electrical connection bodies 110a and second electrical connection bodies 110b alternate in the length direction X of the battery module, wherein at least two second electrical connection bodies 110b are arranged between every two first electrical connection bodies 110a. That is, the first polygons 120 and the second polygons 130 alternate in the length direction of the battery module, wherein at least two first polygons 120 are arranged between every two second polygons 130. For example, when the first polygon 120 is a quadrilateral and the second polygon 130 is a hexagon, two quadrilaterals are arranged between every two hexagons, and short sides of the two quadrilaterals are arranged opposite to each other, and long sides of the two quadrilaterals are arranged adjacent to each other. With this arrangement, a plurality of electrical connection bodies can connect the cell groups in series along the length direction of the battery module, and a single electrical connection body can connect a plurality of single cells in the corresponding cell groups in parallel.

In this embodiment, when the cell group includes at least five cells, at least three connection branches are drawn out from the plurality of electrical connection portions of the electrical connection body. And, the at least three connection branches respectively extend along the three rows of cells, two of which are provided with at least two electrical connection portions, and a remaining one of which is provided with at least one electrical connection portion.

Referring to FIGS. 1, 3 and 4, each cell group includes five cells; the first polygon 120 may be an inclined isosceles trapezoid. Three connection branches can be drawn out from three electrical connection portions when being in the isosceles trapezoid. The three electrical connection portions are respectively arranged corresponding to the three rows of cells. The three connection branches respectively extend along the three rows of cells, two of which are provided with two spaced apart electrical connection portions, and a remaining one of which is provided with one electrical connection portion. The positions of the three connection branches can be exchanged with each other according to the shape of the electrical connection body corresponding to another cell group.

In this embodiment, the first group 101 and the second group 102 of the battery module are arranged in parallel. The first group 101 and the second group 102 are connected at one lateral end of the battery module by an electrical connector 160. A primary anode electrode 150 and a primary cathode electrode 140 are formed at the other lateral ends of the battery module. The primary anode electrode 150 is connected with the electrical connection portion 112 for anode electrode of the electrical connection body, and the primary cathode 140 is connected with the electrical connection portion 111 for cathode electrode of the electrical connection body.

In some embodiments, the battery module includes a set number of cell groups, for example, 36 cell groups in which the first group 101 and the second group 102 respectively include 18 cell groups. It should be noted that the above number of cell groups is discussed only for illustration, and this application does not limit the number of cell groups.

In some embodiments, the electrical connection portion of the electrical connection body is formed with a connection surface that is fixed with the electrode of the single cell, which can effectively increase the connection area, thereby allowing a larger current to pass through, so that the solution of the present application can be adapted to 4C quick charging solution in the related art.

The connection surface can be connected the electrode of the single cell by welding or alternatively by conductive glue.

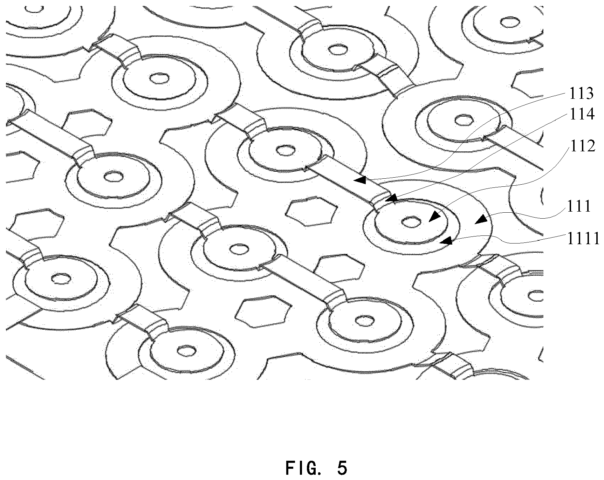

FIG. 5 is a partial structural three-dimensional structure view of an electrical connection assembly according to an embodiment of the present application.

Referring to FIG. 5, in some embodiments, the electrical connection body includes a first connection surface for forming the electrical connection portion 112 for anode electrode and a second connection surface for forming the electrical connection portion 111 for cathode electrode. There is a height difference between the first connection surface and the second connection surface. That is, the first connection surface and the second connection surface are located in planes with different heights, forming a stagger arrangement in the height direction of the battery module.

The electrical connection portion 112 for anode electrode and the electrical connection portion 111 for cathode electrode are connected by a bending portion 114. The bending portion 114 can be inclined relative to the height direction of the battery module, which can further increase the area for connecting the first connection surface and the second connection surface.

The electrical connection assembly 100 of the battery module according to the embodiment of the present application is described above. Accordingly, the present application also provides a battery module including a plurality of cell groups connected by the electrical connection assembly 100.

In this embodiment, the electrical connection assembly 100 includes a plurality of electrical connection bodies corresponding to a plurality of cell groups of the battery module in a one-to-one relationship, and configured to electrically connect the plurality of cell groups. The cell group includes a plurality of single cells, an anode electrode and a cathode electrode of the single cell are arranged on a same one side thereof. The electrical connection body is provided with a plurality of electrical connection portions. The plurality of electrical connection portions are respectively connected with the electrodes of a plurality of single cells. Each of a plurality of conductive portions 113 is formed between adjacent electrical connection portions. The plurality of conductive portions 113 of the electrical connection body have a same length and a same cross-sectional area taken along a direction perpendicular to a length direction. This embodiment provides a solution in which the plurality of conductive portions 113 have the same length and the same cross-sectional area taken along the direction perpendicular to the length direction, so that the plurality of conductive portions 113 of each electrical connection body have the same internal resistances, and thus each single cell has the same voltage. As a result, this lowers voltage difference between the single cells, and reduces workload of information processing of BMS and workload of backend detection for charging or discharging of the battery module.

Accordingly, the present application also provides a vehicle including the battery module as described in the above embodiments. The battery module and its electrical connection assembly 100 can be referred to the descriptions in the above-mentioned embodiments, and will not be repeated herein.

Various embodiments of the present application have been described above, and the foregoing descriptions are exemplary, not exhaustive, and not limiting of the disclosed embodiments. Numerous modifications and variations will be apparent to those skilled in the art without departing from the scope and spirit of the described embodiments. The terminologies used herein are chosen to best explain the principles of the embodiments, the practical application or improvement over the technology in the marketplace, or to enable others of ordinary skill in the art to understand the embodiments disclosed herein.

## Claims

1. An electrical connection assembly for a battery module, **characterized in that** the electrical connection assembly comprises:
a plurality of electrical connection bodies corresponding to a plurality of cell groups of the battery module in a one-to-one relationship, and configured to electrically connect the plurality of the cell groups,
wherein, the cell group comprises a plurality of single cells, an anode electrode and a cathode electrode of the single cell are arranged on a same one side thereof, and the electrical connection body is provided with a plurality of electrical connection portions respectively connected with the electrodes of the plurality of the single cells;
each of a plurality of conductive portions is formed between adjacent electrical connection portions, and the plurality of conductive portions of the electrical connection body have a same length and a same cross-sectional area taken along a direction perpendicular to a length direction.

2. The electrical connection assembly according to claim 1, **characterized in that**,
the electrical connection body is provided with a plurality of electrical connection portions for anode electrode and a plurality of electrical connection portions for cathode electrode, the electrical connection portion for anode electrode configured to connect with the anode electrode of the single cell of one of the cell groups, the electrical connection portion for cathode electrode configured to connect with the cathode electrode of the single cell of another of the cell groups;
wherein the electrical connection portion for anode electrode of one of the electrical connection bodies extends into the electrical connection portion for cathode electrode of another adjacent electrical connection body; or the electrical connection portion for cathode electrode of one of the electrical connection bodies extends into the electrical connection portion for anode electrode of another adjacent electrical connection body.

3. The electrical connection assembly according to claim 1, **characterized in that**,
the electrical connection body is provided with a preset number of the electrical connection portions arranged respectively at locations corresponding to a plurality of vertices of polygons.

4. The electrical connection assembly according to claim 3, **characterized in that**,
the plurality of the electrical connection bodies are arranged in a rectangular structure along a same plane, and the rectangular structure is composed of the polygons;
wherein the battery module is provided with at least three rows of cells, and the electrical connection body comprises at least five electrical connection portions; and at least three connection branches are drawn out from the plurality of electrical connection portions of the electrical connection body, and extend along the at least three rows of the cells respectively, two of which are provided with at least two of the electrical connection portions, and a remaining one of which is provided with at least one of the electrical connection portions.

5. The electrical connection assembly according to claim 2, **characterized in that**,
the plurality of electrical connection portions for anode electrode of the electrical connection body are arranged in a first area, the plurality of electrical connection portions for cathode electrode are arranged in a second area, and two adjacent cell groups are arranged in the first area and the second area respectively;
the plurality of electrical connection portions for anode electrode in the first area are arranged respectively at locations corresponding to a plurality of vertices of first polygons, and the plurality of electrical connection portions for cathode electrode in the second area are arranged respectively at locations corresponding to a plurality of vertices of second polygons; and
the first polygon has a same shape with the second polygon, or has a different shape from the second polygon.

6. The electrical connection assembly according to claim 5, **characterized in that**,
the first polygons and the second polygons are alternately arranged in a direction where the cell groups are arranged, wherein at least two of the first polygons are arranged between every two of the second polygons.

7. The electrical connection assembly according to any one of claims 1-6, **characterized in that**,
the electrical connection body is made of sheet-like conductive material, and the electrical connection portion is formed with a connecting surface fixed with the electrode of the single cell.

8. The electrical connection assembly according to claim 2, **characterized in that**,
the electrical connection body comprises a first connection surface for forming the electrical connection portion for anode electrode, and a second connection surface for forming the electrical connection portion for cathode electrode; and the first connection surface and the second connection surface are layered and connected by bending portions.

9. The electrical connection assembly according to claim 1, **characterized in that**, the shape of the electrical connection portion for anode electrode is arranged to match with the structure feature of the anode electrode of the cell, and wherein the electrical connection portion for anode electrode has an annular sheet-like structure which is integrally attach onto the anode electrode at the center of the cell end.

10. The electrical connection assembly according to claim 1, **characterized in that**, the shape of the electrical connection portion for cathode electrode is arranged to match with the cathode electrode of the cell, preferably wherein the electrical connection portion for cathode electrode has an annular sheet-like structure, and a hollow portion is formed in the annular sheet-like structure and has an inner diameter larger than an outer diameter of the electrical connection portion for anode electrode, which enables the electrical connection portion for anode electrode to be accommodated in the hollow portion, such that both the electrical connection portion for anode electrode and the electrical connection portion for cathode electrode can be stably connected to the upper end of the cell.

11. The electrical connection assembly according to claim 1, **characterized in that**, the electrical connection body includes at least five electrical connecting portions, and the at least five electrical connection portions are connected by the conductive portion to form a structure similar to a quadrangle or a hexagon.

12. The electrical connection assembly according to claim 5, **characterized in that**, the first polygon has a quadrilateral structure, preferably wherein the first polygon is an isosceles trapezoid, or preferably wherein five electrical connection portions are connected by the conductive portions to form a shape similar to five-ring pattern, and
more preferably wherein the second polygon has a hexagonal structure, wherein the hexagonal structure is composed of two isosceles triangles whose vertices are connected and whose base sides are opposite to each other and are parallel to each other, and wherein the base sides of the two isosceles triangles are parallel to a length direction X of the battery module, and two parallel sides of the quadrilateral are inclined with respect to the length direction X of the battery module.

13. The electrical connection assembly according to claim 1, **characterized in that**, the electrical connection body includes a first connection surface for forming the electrical connection portion for anode electrode and a second connection surface for forming the electrical connection portion for cathode electrode, wherein there is a height difference between the first connection surface and the second connection surface, so that the first connection surface and the second connection surface are located in planes with different heights, forming a stagger arrangement in the height direction of the battery module, and wherein the electrical connection portion for anode electrode and the electrical connection portion for cathode electrode are connected by a bending portion, preferably wherein the bending portion is inclined relative to the height direction of the battery module, which can further increase the area for connecting the first connection surface and the second connection surface.

14. A battery module, **characterized in that**, the battery module comprises:
a plurality of cell groups configured to be connected by the electrical connection assembly according to any one of claims 1-13.

15. A vehicle, **characterized in that**, the vehicle comprises the battery module according to claim 14.
